# EUROPÄISCHE PATENTSCHRIFT

(11) **EP 2 177 796 B1**
(45) Veröffentlichungstag und Bekanntmachung des Hinweises auf die Patenterteilung: **24.10.2012**
(21) Anmeldenummer: 09012694.7
(22) Anmeldetag: 07.10.2009
(51) Int. Cl.: F16K 1/12

(54) **Rohrförmige Ventileinrichtung**
Tubular valve device
Dispositif de soupape tubulaire

(30) Priorität: 15.10.2008 DE 102008051759
(43) Veröffentlichungstag der Anmeldung: 21.04.2010
(73) Patentinhaber: Karl Dungs GmbH & Co.KG, 73660 Urbach (DE)
(72) Erfinder: Forster, Joachim, 71364 Winnenden (DE)
(74) Vertreter: Rüger, Barthelt & Abel

(56) Entgegenhaltungen:
- EP-A2- 1 255 066
- DE-B3-102004 059 926
- DE-U1- 20 311 032
- DE-U1-202006 018 420

## Beschreibung

Die Erfindung betrifft ein Ventil in Rohrform sowie ein Verfahren zum Freigeben und Sperren eines Fluidstroms mit einem solchen Ventil.

Grundsätzlich weisen Ventile ein Ventilgehäuse und zumindest ein darin angeordnetes Ventilverschlussglied auf. Häufig ist das Ventilverschlussglied in Bezug auf einen Ventilsitz linear hin und her gehend bewegbar, um den Ventilsitz kontrolliert zu verschließen oder freizugeben. Zur Betätigung solcher Ventile werden oft Zugmagnete eingesetzt, deren Anker das Ventilverschlussglied gegen die Kraft einer Schließfeder von dem Ventilsitz weg bewegt. Solche Ventile haben Selbstschlussfunktion. Bei der Dimensionierung des Magnetantriebs wird darauf geachtet, dass dieser in der Lage ist, die Kraft der Schließfeder zu überwinden. Dies führt häufig zu relativ großen und entsprechend strombedürftigen Magnetantrieben.

Es ist auch schon vorgeschlagen worden, das Ventilverschlussglied über eine Motorstelleinheit zur verstellen. Die lineare Stellbewegung für das ventilverschlussglied wird aus der Drehbewegung des Motors, beispielsweise über ein Spindelhubgetriebe, erzeugt.

Bei solchen Ventilen ist es relativ schwierig, eine Selbstschlussfunktion zu erhalten, die erforderlich ist, wenn das Ventil im Gefahrenfalle automatisch schließt.

Die Selbstschlussfunktion wird meist durch Schließfedern erbracht, die im erstgenannten Falle den Zugmagneten und im zweitgenannten Falle den Motorstellantrieb aus der Offenstellung in die Schließstellung führen. Entsprechend stark dimensionierte Schließfedern können zu einem stoßartigen, harten Aufsetzen des Ventilverschlussglieds auf dem Ventilsitz und mit der Zeit dort zu Beschädigung führen.Es ist aus der DE 10 2004 059 926 B3 ein umschaltbares Rückschlagventil bekannt. Dieses weist zwei zueinander koaxiale federbelastete Ventilverschlussglieder auf, zwischen denen ein Ventilsitzrohr axial verstellbar angeordnet ist. Durch die Axialverstellung dieses Rohres zu dem einen oder dem anderen Ventilverschlussglied hin lassen sich zwei einander entgegen gesetzte Flussrichtungen als Durchlassrichtung des Ventils auswählen.

Es ist Aufgabe der Erfindung Maßnahmen anzugeben, mit denen an einem Fluidventil wenigstens eines der oben genannten Probleme überwunden oder zumindest gemildert werden kann.

Diese Aufgabe wird mit einem Ventil nach Anspruch 1 sowie mit dem Verfahren nach Anspruch 13 gelöst:

Nach Anspruch 1 weist das erfindungsgemäße Ventil ein rohrförmiges Gehäuse auf, in dem zumindest ein z.B. hülsenförmiger Ventilsitzring axial beweglich angeordnet ist. Optional, aber vorzugsweise, sind zwei solche zueinander konzentrisch angeordnete Ventilsitzringe vorgesehen. Eine Arretiereinrichtung dient dazu, die Ventilsitzringe wahlweise in einer vorgegebenen Position zu arretieren und gegebenenfalls freizugeben. Den Ventilsitzringen ist zumindest ein Ventilverschlussglied zugeordnet, dass ebenfalls beweglich gelagert ist. Es ist auf die Ventilsitzringe hin und von diesem weg bewegbar, um die Ventilsitzringe wahlweise zu verschließen, zu verschieben oder freizugeben. Zur Bewegung des Ventilverschlussglieds ist eine Stelleinrichtung zur Verstellung der Position derselben vorgesehen.

Ein solches Ventil gestattet es, die Ventilsitzringe mittels der Stelleinrichtung des Ventilverschlussglieds zu verschieben. Es kann die Stelleinrichtung des Ventilverschlussglieds gezielt dazu genutzt werden, die Ventilsitzringe in eine Arretierposition zu verschieben, in der sie von der Arretiereinrichtung festgehalten werden können. Sind die Ventilsitzringe einmal in dieser Position arretiert, kann das Ventilverschlussglied durch Betätigung der Stelleinrichtung von den Ventilsitzringen weg bewegt werden, um den Gasfluss oder Fluss sonstigen Fluids reguliert freizugeben. Das Ventilverschlussglied kann dabei sowohl zu einer Feinregulierung des Fluidstroms wie auch zum schlichten Öffnen und Schließen verwendet werden. Die Stelleinrichtung ist vorzugsweise so ausgebildet, dass die Stellgeschwindigkeit des Ventilverschlussglieds wie auch seine Positionierung fein regulierbar ist. Beispielsweise kann ein Schrittmotorantrieb zur Verstellung des Ventilverschlussglieds dienen.

Um einen Schnellschluss zu bewirken, ist lediglich die Arretiereinrichtung zumindest eines der Ventilsitzringe freizugeben. Bei Freigabe können die Ventilsitzringe durch ein geeignetes Mittel wie beispielsweise Federmittel, wie z.B. Druckfeder, Zugfedern, sich abstoßende Permanentmagnete, sich anziehende Permanentmagnete oder dergleichen, auf das Ventilverschlussglied hin bewegt werden, um den Fluidpfad zu schließen. Die Schließfunktion ist insoweit unabhängig von der aktuellen Position des Ventilverschlussglieds. Der Schnellschluss des Ventils erfolgt durch Entriegelung zumindest eines Ventilsitzrings und Verschiebung von wenigstens einem Ventilsitzring zu dem Ventilverschlussglied hin.

Mit dem insoweit beschriebenen Ventil lassen sich mehrere Vorzüge erzielen. Zum einen kann die Arretiereinrichtung auf besonders einfache und stromsparende Weise durch einen Haltemagneten gebildet sein, dessen Zugkraft nicht ausreichen muss, um die Schließfeder zu überwinden. Es genügt eine Haltekraft, die größer ist als die Kraft der Schließfeder. Damit kann der Haltemagnet mit einer relativ schwach dimensionierten Haltespule versehen werden. Der Kupferaufwand ist gering. Entsprechend gering sind Wärmeentwicklung und Stromverbrauch.

Die Schließfeder wirkt auf den Ventilsitzring. Der anstehende Gasdruck erzeugt nur eine geringe auf den Ventilsitzring wirkende Kraft. Die effektive Wirkfläche, auf die der Gasdruck einwirkt, ist lediglich die Stirnfläche des Ventilsitzrings. Damit werden schlagartige Schließvorgänge vermieden, bei denen das durch das Ventil strömende fluide Medium durch statischen Druck oder zusätzlich auftretenden Staudruck zu einem harten Aufschlagen von Ventilverschlussglied und Ventilsitz aufeinander führt. Dies reduziert den Verschleiß an dem Ventilsitz und dem Ventilverschlussglied.

Außerdem gestattet es das erfindungsgemäße Konzept problemlos, die Feineinstellfunktion eines Ventils mit fein positionierbarem Ventilverschlussglied mit der Schnellschlussfunktion eines Auf/Zu-Ventils zu kombinieren. Dies gelingt, indem die Schnellschlussfunktion dem Ventilsitzring zugeordnet wird, während die Feineinstellfunktion dem Ventilverschlussglied zugeordnet ist.

Das Schließen des Ventils kann durch Freigabe der Arretiereinrichtung oder auch unter Beibehaltung der Arretierung durch entsprechend kontrollierte Feststellung des Ventilverschlussglieds erfolgen. In letzterem Falle wird das Freigeben der Arretiereinrichtung ausschließlich zur Sicherheitsabschaltung genutzt.

Die vorgenannten Vorteile lassen sich auch mit dem Ventil nach Anspruch 2 erzielen. Während die Arretiereinrichtung bei dem Ventil nach Anspruch 1 als Magnetspule oder bedarfsweise auch anderweitig ausgebildet sein kann, wobei die Magnetspule innerhalb oder außerhalb des rohrförmigen Gehäuses angeordnet ist, sieht Anspruch 2 die Anordnung der Magnetspule zur Arretierung des mindestens einen Ventilsitzrings in dem Gehäuse vor. Dies hat den Vorteil, dass die Magnetspule durch den durch das Gehäuse strömende Fluidstrom gekühlt wird. Diese Maßnahme ermöglicht höhere Stromdichten in der Magnetspule und somit Kupfereinsparungen. Ansonsten lassen sich alle übrigen im Zusammenhang mit dem Ventil nach Anspruch 1 genannten Vorzügen auch bei dem Ventil nach Anspruch 2 erzielen.

Ebenso liefert das Ventil nach Anspruch 3 die vorgenannten Vorzüge. Während die Stelleinrichtung für das Ventilverschlussglied bei dem vorgenannten Ausführungsformen prinzipiell beliebig ausgebildet sein kann, sieht Anspruch 3 die Ausbildung der Stelleinrichtung für das Ventilverschlussglied auf eine Weise vor, das die Stelleinrichtung eine Selbsthaltefunktion erhält. Beispielsweise ist zwischen einem Antrieb, zum Beispiel einem Motor, und dem Ventilverschlussglied, ein selbstsperrendes Getriebe vorgesehen. Ein solches Getriebe kann ein Spindelhubgetriebe, ein Schneckengetriebe oder dergleichen oder mehrere solcher Getriebe in Kombination sein.

Als Antrieb dient für die Stelleinrichtung vorzugsweise ein Elektromotor. Dieser kann als Schrittmotor, Gleichstrommotor, Synchronmotor, Asynchronmotor oder dergleichen ausgebildet sein. Er kann sowohl innerhalb des rohrförmigen Gehäuses wie auch außerhalb derselben angeordnet sein.

Das erfindungsgemäße Ventil gestattet die Nutzung besonders energiesparender Antriebe. Außerdem ergibt sich ein hoher Volumenstrom bei kleiner Nennweite und insgesamt ein geringes Bauvolumen. Das rohrförmige Gehäuse kann an seinen Enden mit Gewinden, Flanschen oder sonstigen Verbindungsmitteln versehen werden. Außerdem kann, zumindest wenn dem Ventilverschlussglied zwei Ventilsitzringe zugeordnet sind, eine Dichtprüfung vorgenommen werden. Dies gilt insbesondere, wenn die beiden Ventilsitzringe gegeneinander angedichtet sind, um einen zwischen den Ventilsitzringen eingeschlossenen Mittelraum festzulegen, an den eine Drucküberwachung angeschlossen ist. Es zeigt sich außerdem, dass das Ventilkonzept zu Ventilen führt, die unabhängig von der Einbaulage funktionsfähig sind. Das Konzept eignet sich außerdem für einen Druckbereich von 0 bis mehreren bar und somit für viele Anwendungen bei verschiedenen Kunden. Das Ventil kann leise betätigt werden. Öffnungs- und Schließgeräusche sind minimiert. Wie erwähnt, kann der Fluidstrom stufenlos moduliert werden. Es beruht au-βerdem auf wenigen Bauteilen und ist leicht an verschiedene Einsatzfälle anpassbar.

Weitere Einzelheiten vorteilhafter Ausführungsformen der Erfindung ergeben sich aus der Beschreibung oder der Zeichnung. Die Beschreibung beschränkt sich auf wesentliche Aspekte der Erfindung und sonstiger Gegebenheiten. Die Zeichnung offenbart weitere Einzelheiten von Ausführungsbeispiel und ist ergänzend heranzuziehen.

Es zeigen:
Fig. 1 ein erfindungsgemäßes Ventil in vereinfachter Längsschnittdarstellung in einer ersten Schließposition in der oberen Bildhälfte und in einer zweiten Schließposition in der unteren Bildhälfte und
Fig. 2 das Ventil nach Figur 1, in Längsschnittdarstellung in Offenstellung.

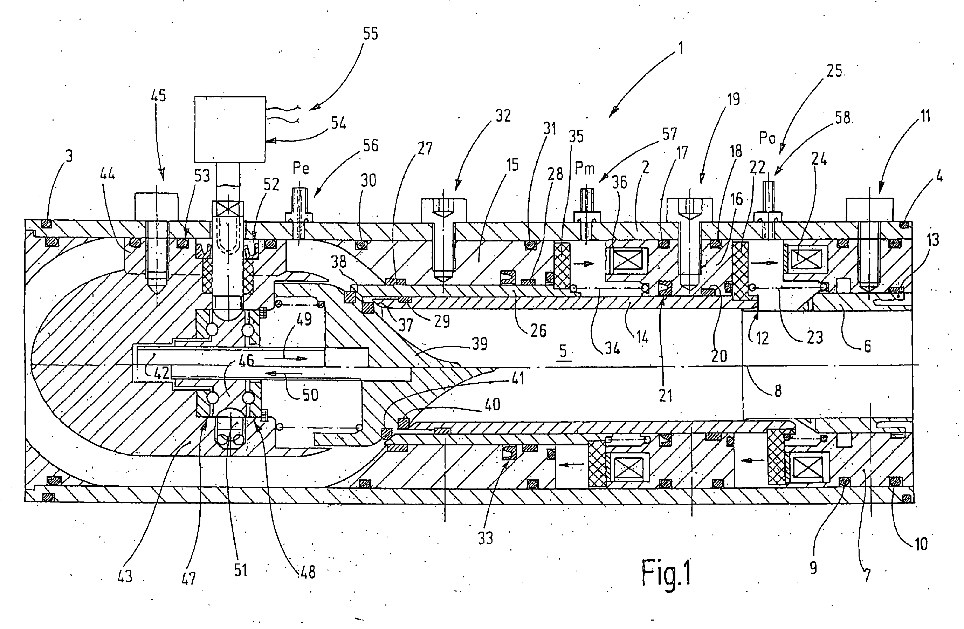

In Figur 1 ist eine Ventil 1 veranschaulicht, das ein rohrförmiges Gehäuse 2 aufweist, beispielsweise als Gasventil, zum Beispiel auch als Gassicherheitsventil dient. Das Gehäuse 2 ist an seinen beiden voneinander weg weisenden Enden mit nicht weiter veranschaulichten Verbindungsmitteln zum Anschluss weiterer Rohre und beispielsweise Dichtungen 3, 4 versehen. In dem Gehäuse 2 ist ein Fluidkanal 5 festgelegt, der von einem Ende zum anderen Ende führt. Der Fluidkanal 5 wird eingangsseitig von einem rohrförmigen Leitstück 6 umgrenzt, dass durch einen Ring 7 in dem Gehäuse 2 ortsfest und konzentrisch zu einer Mittelachse 8 gehalten ist. Der Ring 7 weist an seinem vorzugsweise zylindrischen Außenumfang zumindest eine oder auch mehrere Umfangsnuten auf, in denen Dichtungen 9, 10 untergebracht sein können, um den Ring 7 in Axialrichtung gegen die Innenwandung des rohrförmigen Gehäuses 2 abzudichten. Eine Schraube 11 kann dazu vorgesehen sein, den Ring 7 ortsfest zu sichern.

Der Einsatz 6 weist eine rohrförmige Lippe 12 auf, die sich von dem offenen Ende Einsatzes 6 weg in den Innenraum des Gehäuses 2 hinein erstreckt. Außerdem ist der Einsatz 6 mit einer Befestigungsreinrichtung beispielsweise in Form von Rastfingern 13 versehen, die eine axiale Sicherung des Einsatzes 6 an dem Ring 7 bewirken und dort beispielsweise in eine Nut greifen.

Im Anschluss an den Einsatz 6 wird der Fluidkanal 5 durch einen länglichen, rohrartigen Ventilsitzring 14 begrenzt. Dieser ist axial verschiebbar gelagert und als Hülse ausgebildet. Er wird von zwei axial voneinander beabstandeten Führungsringen 15, 16 in dem rohrförmigen Gehäuse 2 zu der Mittelachse 8 zentriert.

Die Manschette 12 des Leiteinsatzes 6 erstreckt sich in den Innenraum des Ventilsitzrings 14 hinein und liegt an der Wandung derselben gleitend an wenn der Ventilsitzring 14 axial verschoben wird. Der Führungsring 16 ist mittels zu der Mittelachse 8 konzentrischer Dichtungen 17, 18 gegen die innere Wandung des Gehäuses 2 abgedichtet und durch eine Schraube 19 unverdrehbar und axial fest gesichert. An seiner Innenseite trägt er einen Gleitring 20, der den Ventilsitzring 14 leicht verschiebbar lagert. Außerdem ist er mit einer Dichtung, beispielsweise in Gestalt einer Lippendichtung 21, versehen, die den Leitring 16 gegen den Ventilsitzring 14 außen in Axialrichtung gasdicht abdichtet.

Das dem Leitstück 6 zugewandte Ende des Ventilsitzrings 14 ist mit einem weichmagnetischen Ankerring 22 versehen. Dieser ist zusammen mit dem Ventilsitzring 14 axial bewegbar. Eine Druckfeder 23 spannt den Ventilsitzring 14 und den Ankerring 22 dabei von dem Ring 17 weg vor.

Der Ring 17 besteht beispielsweise aus weichmagnetischem Material. Er kann insbesondere an seiner dem Ankerring 22 zugewandten Seite mit einer Nut versehen sein, die eine wicklung 24 beherbergt. Die windungen der Wicklung 24 sind vorzugsweise konzentrisch zu der Mittelachse 8 angeordnet.

Der Ankerring 22 bildet zusammen mit der Wicklung 24 eine Arretierungseinrichtung 25, mittels derer der Ventilsitzring 14 in einer Position gehalten werden kann, in der die Ankerplatte 22 am im Ring 7 anliegt. Diese Position ist in Figur 1 unten dargestellt, während in Figur 1 oben, die Position dargestellt ist, die der Ventilsitzring 14 bei stromloser Wicklung 24 einnimmt.

Zumindest bei einer bevorzugten Ausführungsform ist konzentrisch zu dem ersten Ventilsitzring 14 ein zweiter Ventilsitzring 26 vorgesehen, der konzentrisch zu dem ersten Ventilsitzring 14 angeordnet ist und seine Außenfläche umgibt. Der Ventilsitzring 26 ist als Hülse ausgebildet und sitzt in dem Führungsring 15, der ein oder mehrere Gleitringe 27, 28 aufweist. Diese gestatten ein leichtes axiales Verschieben des Ventilsitzrings 26 gegen den Führungsring 15 sowie gegen den inneren Ventilsitzring 14. zwischen den Ventilsitzringen 14, 26 kann ein weiterer Gleitring 29 angeordnet sein, der beispielsweise mit dem Ventilsitzring 14 oder alternativ mit dem Ventilsitzring 26 verbunden ist.

Der Führungsring 15 sitzt mittels Dichtungen 30, 31 abgedichtet und durch mindestens eine Schraube 32 ortsfest gesichert in dem Gehäuse 2. Er weist innen eine Ringnut auf in der eine Lippendichtung 33 sitzt. Diese dichtet den zweiten Ventilsitzring 26 außen gasdicht ab.

Der zweite rohrförmig ausgebildete Ventilsitzring 26 ist gegen die Kraft einer Druckfeder 34 axial beweglich. Die Druckfeder 34 stützt sich mit einem Ende an dem Führungsring 16 und mit ihrem anderen Ende an dem ventilsitzring 26 ab. Dieser ist an dem gleichen Ende mit einem scheibenförmigen Ankerring 35 verbunden, der mit dem Ventilsitzring 26 zusammen gegen die Kraft der Druckfeder 34 auf den Führungsring 16 hin verschiebbar ist. Der Führungsring 16 weist an der dem Ankerring 35 zugewandten Seite eine Ringnut auf, in der eine Wicklung 36 sitzt. Die Windungen dieser wicklung 36 sind konzentrisch zu der Mittelachse 18 orientiert. Der Führungsring 16 kann aus einem weichmagnetischen Material bestehen. Die Dimensionierung des Ankerrings 35 und der Wicklung 36 sowie des Führungsrings 16 ist so bemessen, dass die Wicklung 36, wenn sie bestromt wird, den Ankerring 35 an dem Führungsring 16 halten kann. Diese Position ist in Figur 1 unten veranschaulicht. In Figur 1 oben ist die Position des Ventilsitzrings 26 und des Ankerrings 35 in stromlosen Zustand der Wicklung 36 veranschaulichen Die Wicklung 36 bildet zusammen mit dem Ankerring 35 eine Arretierungseinrichtung für den zweiten Ventilsitzring 26.

Beide Ventilsitzringe 14, 26 weisen an ihren von den jeweiligen Ankerringen 22, 35 weg weisenden Enden Dichtflächen 37, 38 auf, die beispielsweise als konische Ringflächen ausgebildet sind. Diese Dichtflächen 37, 38 bilden den eigentlichen Ventilsitz. Innen ist ein Ventilverschlussglied 39 zugeordnet, dass, wie dargestellt, als Strömungskörper ausgebildet sein kann. Seine spitze liegt vorzugsweise etwa auf der Mittelachse 8. Von dort ausgehend, ist das Ventilverschlussglied 39 kegelförmig, tropfenförmig oder anderweitig strömungsgünstig ausgebildet. Es weist im vorliegenden Ausführungsbeispiel zwei Ringdichtungen 40, 41 auf, die konzentrisch zu der Mittelachse 8 angeordnet sind. Ihr Durchmesser ist so bemessen, dass sie mit den Dichtflächen 37, 38 in Anlage kommen können. Sie weisen beispielsweise einen Rechteckquerschnitt auf und sind teilweise in das Ventilverschlussglied 39 eingelassen.

Das Ventilverschlussglied 39 ist entlang der Mittelachse 8 axial verstellbar angeordnet. Dazu dient irgendein geeigneter Stellantrieb. Das Ventilverschlussglied 39 ist in Figur 1 oben in seiner linksseitigen Extremposition dargestellt, in der es den größtmöglichen Abstand von dem Führungsring 15 hat. In Figur 1 unten ist es in seiner rechtsseitigen Extremposition dargestellt, in der es die größtmögliche Annäherung an den Führungsring 15 hat. Wie ersichtlich, ist der Maximalhub des Ventilverschlussglieds 39 mindestens so groß wie der Maximalhub der beiden Ventilsitzringe 14, 26.

Das ventilverschlussglied 39 ist an seiner Rückseite die von seiner Spitze weg weist, becherförmig ausgebildet und mit einer Gewindespindel 42 versehen. Diese taucht in die Bohrung eines Leitkörpers 43, der mit Abstand zu der Innenwandung des Gehäuses 2 zentrisch zu der Mittelachse 8 gehalten ist. Zur Spielbeseitigung kann eine Druckfeder vorgesehen sein, die das Ventilverschlussglied 39 in Schließrichtung drängt. Der Leitkörper 43 weist zumindest einen, vorzugsweise mehrere, zum Beispiel drei Radialfortsätze 44 auf, die wie Speichen von ihm weg ragen und innen an der Innenfläche des Gehäuses 2 anliegen. Eine in einem solchen Radialfortsatz 44 angeordnete Gewindebohrung kann zur Aufnahme einer Befestigungsschraube 45 dienen, mit der der Leitkörper 43 axial ortsfest gesichert wird. Der Leitkörper 43 weist einen Innenraum auf, in dem eine Gewindemutter 46 zwischen zwei Axialdrucklagern 47, 48 drehbar gelagert ist. Die Gewindemutter 46 weist ein Innengewinde auf, und ist mit der Gewindespindel 42 verschraubt. Eine Drehung der Gewindemutter 46 bewirkt deshalb eine Verstellung der Gewindespindel 42 und somit des Ventilverschlussglieds 39 in Richtung des Pfeils 49 oder 50.

Die Gewindemutter 46 ist außen mit einer Verzahnung versehen. Sie kämmt mit einer Schnecke 51, die tangential zu dem von der Gewindemutter 46 gebildeten Zahnrad angeordnet und drehbar gelagert ist. Die Schnecke 51 durchsetzt den Leitkörper 43 und den Radialfortsatz 44. Durch eine öffnung des Gehäuses 2 ragt sie nach außen. Eine in dem Radialfortsatz 44 vorgesehene Lippendichtung 52 oder ein sonstiges Dichtungsmittel, dichtete den Gasraum nach außen hin ab. Ein weiteres Dichtungsmittel, beispielsweise eine 8-förmige Gummidichtung 53, die in einer entsprechend geformten Nut des Radialfortsatzes 44 angeordnet sein kann, dichtet außerdem sowohl die Gewindebohrung der Befestigungsschraube 45 wie auch die Durchgangsbohrung für die Schnecke 52 nach außen ab.

Das nach außen ragende Ende der Schnecke 51 kann mit einem Drehantrieb, wie beispielsweise einem Schrittmotor oder einem sonstigen Motor 54, verbunden sein. Seine elektrischen Anschlüsse 55 sind in Figur 1 lediglich symbolisch veranschaulicht. Der Motor 54 ist über einen nicht weiter veranschaulichten Halter mit dem Gehäuse 2 verbunden.

Optional können an dem Gehäuse 2 Druckmessanschlüsse 56, 57 einzeln oder in Verbindung miteinander vorgesehen sein. Der Druckanschluss 56 misst den abströmseitigen Druck. Der Druckanschluss 58 ermöglicht die zustromseitige Druckmessung. Der Druckanschluss 57 ermöglicht die Messung des Drucks zwischen den beiden Ventilsitzrihgen 14, 26. Bei dem beschriebenen Ventil 1 handelt es sich um ein Doppelsitzventil. Der Anschluss 57 führt in den so genannten Mittelraum zwischen beiden Einzelventilen. Das erste ventil wird von dem Ventilsitzring 14 und der Ringdichtung 40 gebildet. Das zweite Ventil wird von dem Ventilsitzring 26 und der Ringdichtung 41 gebildet.

Das insoweit beschriebene Ventil 1 arbeitet wie folgt:

Es wird zunächst angenommen, dass das Ventil 1 stromlos ist. Weder die Wicklung 24, noch die Wicklung 36 führt Strom. Die Ventilsitzringe 14 26 sind durch die zugeordneten Druckfedern 23, 34 jeweils weitest möglich in Richtung auf das ventilverschlussglied 39 verschoben. Die Dichtflächen 37, 38 liegen an den Ringdichtungen 40 41 an. Damit ist der Gasstrom durch den Fluidkanal 5 unabhängig von der Position des Ventilverschlussglieds 39 gesperrt. Befindet es sich in einer linken Position, wie es Figur 1 oben veranschaulicht, ist das Ventil ebenso geschlossen, wie wenn es sich in einer rechten Position befindet, wie in Figur 1 unten veranschaulicht.

Soll das Ventil 1 geöffnet werden, wird das Ventilverschlussglied 39 durch entsprechende Ansteuerung des Motors 54 so verfahren, dass die Ventilsitzringe 14, 26 zu den Wicklungen 24, 36 hin verschoben werden, sofern es nicht ohnehin schon diese Position einnimmt. Dazu wird die Gewindemutter 46 in einer solchen Richtung gedreht, dass sich die Gewindespindel 42 in Richtung des Pfeils 49 bewegt. Das Ventilverschlussglied 39 verschiebt dadurch die Ventilsitzringe 14, 26 aus der in Figur 1 oberen Position in die in Figur 1 unten dargestellte Position, in der die Ankerringe 22, 35 an dem Ring 7 bzw. dem Führungsring 16 anliegen. Eine Bestromung der Wicklungen 24, 36 bewirkt nun, dass die Ankerringe 22, 35 an den Ringen 7, 16 haften. Die Druckfedern 23, 34 sind in ihrer Stärke so bemessen, dass sie diese Haftkraft nicht überwinden können. Die Ventilsitzringe 14, 26 sind dadurch in einer Position arretiert, in der das Ventil durch Verstellung des Ventilverschlussglieds 39 geöffnet werden kann.

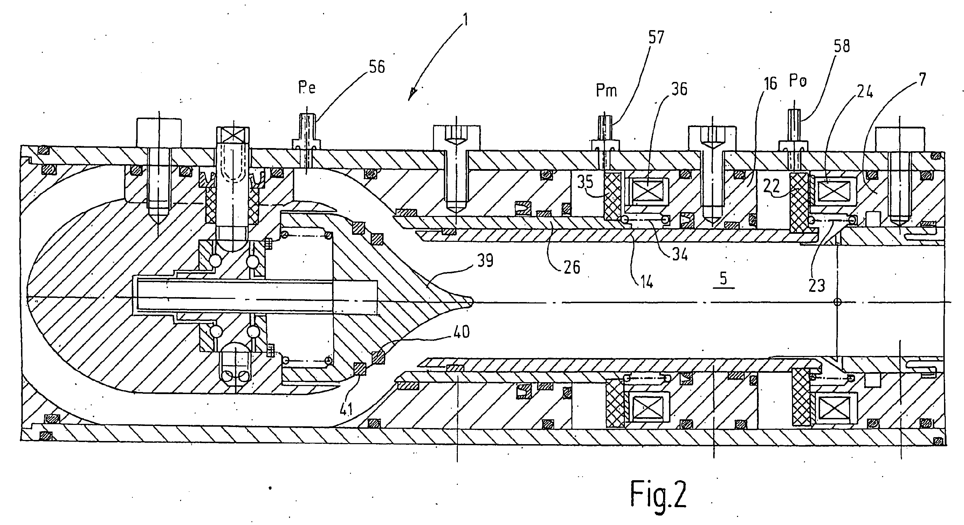

Wenn sich das Ventilverschlussglied 39 in der in Figur 1 unten dargestellten Position befindet, hat das Ventil 1 eine Ruheposition. Aus dieser heraus kann es sofort geöffnet werden, indem die wicklungen 24, 26 und der Motor 54 bestromt werden, so dass der Motor 54 die Gewindespindel 42 in Richtung des Pfeils 50 bewegt. Dadurch gelangt das Ventil 1 in den in Figur 2 veranschaulichten Zustand. Das Ventilverschlussglied 39 gibt die Ventilsitze frei, während die Wicklungen 24, 36 infolge des Stromdurchflusses die Ventilsitzringe 14, 26 in der Freigabeposition gemäß Figur 2 halten. Das Ventilverschlussglied 39 kann nun beliebig verstellt werden, um einen Gasdurchfluss durch den Fluidkanal 5 ganz freizugeben oder mehr oder weniger zu drosseln. Er kann auch wieder auf Null gestellt werder, wenn das Ventilverschlussglied 39 in Schließstellung gefahren wird.

Ist das Ventil 1 in der Stellung gemäß Figur 2 offen und soll es schnell geschlossen werden, genügt es die Stromzufuhr zu zumindest einer der Wicklungen 24, 36 zu unterbrechen. In diesem Fall fällt die Haftkraft weg, die die Ankerringe 22, 35 an den Wicklungen 24, 36 hält. Die Druckfedern 23, 34 drücken nun die Ankerringe 22, 35 von den Stirnseiten der Ringe 7, 16 ab, wodurch die Ventilverschlussringe 14, 26 mit ihren Dichtflächen 37, 38 ungeachtet der Position des Ventilverschlussglieds 39 an die Dichtringe 40, 41 anfahren und dort abdichten.

Das insoweit beschriebene Ventil 1 erfüllt somit bei geringem Energiebedarf und geringer Bauform sowohl Sicherheitsfunktion mit Schnellschlusscharakteristik als auch einem Modulationsfunktion. Außerdem kann auf einfacher Weise eine Dichtheitsprüfung unternommen werden, indem der Druck in dem Mittelraum über den Anschluss 57 überwacht wird. Es ist dabei auch möglich, lediglich ein Ventil dieser Doppelventilanordnung zu schließen. Dies kann beispielsweise geschehen, indem zunächst beide Ventilsitzringe 14, 26 in Arretierungsposition gemäß Figur 2 gebracht und dort gehalten werden, woraufhin das Ventilverschlussglied 39 in Offenstellung geht und die Arretierungsposition für nur einen der beiden Ventilsitzringe 14, 26 oder die Arretierung der beiden Ventilsitzringe 14, 26 nacheinander gelöst wird. Wird beispielsweise zunächst die Arretierung des Ventilsitzrings 14 und danach die Arretierung des Ventilsitzrings 26 gelöst muss der Druck an dem Anschluss 57 mit dem Druck an dem Anschluss 56 übereinstimmen. Steigt er dann mit der Zeit an, ist das Ventil des Ventilsitzrings 14 undicht. Umgekehrt muss der Druck an dem Anschluss 57 mit dem Druck an dem Anschluss 58 übereinstimmen, wenn zuerst die wicklung 36 und dann die Wicklung 24 stromlos wird. Das in den Mittelraum eingeschlossene Gasvolumen hat den Eingangsdruck. Fällt dieser Allmählich ab, ist das Ventil des Ventilsitzrings 36 undicht.

Das vorgestellte Ventil 1 beruht auf zwei axial verstellbaren hülsenförmigen Ventilsitzringen 14, 26, denen Arretierungseinrichtungen in Gestalt von ringförmigen Ankerplatten 22, 35 und zugeordneten Haltewicklungen 24, 36 zugeordnet sind. Das Ventilverschlussglied 39 ist über einen Positionsstellantrieb variabel verstellbar. Es hat eine Doppelfunktion. Es dient einerseits dazu, die Ventilsitzringe 14, 26 in Arretierungsposition zu überführen und andererseits den Gasfluss zu regulieren.

### Bezugszeichen

- 1: Gasventil
- 2: Gehäuse
- 3,4: Dichtungen
- 5: Fluidkanal
- 6: Leitstück
- 7: Ring
- 8: Mittelachse
- 9,10: Dichtungen
- 11: Schraube
- 12: Manschette
- 13: Rastmittel
- 14: Ventilsitzring
- 15,16: Führungsringe
- 17,18: Dichtungen
- 19: Schraube
- 20: Gleitring
- 21: Dichtring
- 22: Ankerring
- 23: Druckfeder
- 24: Wicklung
- 25: Arretierungseinrichtung
- 26: Ventilsitzring
- 27,28,29: Gleitringe
- 30,31: Dichtungen
- 32: Schraube
- 33: Lippendichtung
- 34: Druckfeder
- 35: Ankerring
- 36: Wicklung
- 37, 38: Dichtflächen
- 39: Ventilverschlussglied
- 40,41: Ringdichtungen
- 42: Gewindespindel
- 43: Leitkörper
- 44: Radialfortsatz
- 45: Befestigungsschraube
- 46: Gewindemutter
- 47,48: Axialdrucklager
- 49,50: Pfeil
- 51: Schnecke
- 52: Lippendichtung
- 53: Dichtung (8-förmig)
- 54: Motor
- 55: Anschlussleitungen
- 56,57,58: Druckmessanschlüsse

## Patentansprüche

1. Ventil (1)
mit einem rohrförmigen Gehäuse (2),
in dem zumindest ein erster Ventilsitzring (14) axial beweglich angeordnet ist,
mit einer Arretiereinrichtung (22, 24, 35, 36), die den Ventilsitzringen (14, 26) zugeordnet ist, um diese wahlweise in einer vorgegebenen Position zu arretieren,
mit einem Ventilverschlussglied (39), das auf die Ventilsitzringe (14, 26) hin und von diesen weg bewegbar ist, um die Ventilsitzringe (14, 26) wahlweise zu verschließen, zu verschieben und sie freizugeben,
**dadurch gekennzeichnet,**
**dass** eine Stelleinrichtung (42, 46, 51, 54) zur Verstellung der Position des Ventilverschlussglieds (39) vorgesehen ist.

2. Ventil nach Anspruch 1, **dadurch gekennzeichnet, dass** die Arretiereinrichtung (22, 24, 35, 36) eine Magnetspule (24) aufweist, die in dem rohrförmigen Gehäuse (2) angeordnet ist.

3. Ventil nach Anspruch 1, **dadurch gekennzeichnet, dass** dem Ventilsitzring (24) ein Vorspannmittel (23) zugeordnet ist, um den Ventilsitzring (24) in Richtung auf das Ventilverschlussglied (39) vorzuspannen.

4. Ventil nach Anspruch 1, 2, 3, **dadurch gekennzeichnet, dass** ein zweiter Ventilsitzring (26) vorgesehen ist, der axial beweglich und zu dem ersten Ventilsitzring (14) konzentrisch angeordnet ist, wobei jedem Ventilsitzring (14, 26) jeweils eine Druckfeder (23, 34) zugeordnet ist, um die Ventilsitzringe (14, 26) in Richtung auf das Ventilverschlussglied (39) vorzuspannen

5. Ventil nach Anspruch 1, **dadurch gekennzeichnet, dass** das Ventilverschlussglied (39) und der oder die Ventilsitzringe (14, 26) zu dem Gehäuse (2) konzentrisch angeordnet sind.

6. Ventil nach Anspruch 1, **dadurch gekennzeichnet, dass** die Stelleinrichtung (42, 46, 51, 54) einen Stellmotor (54) aufweist.

7. Ventil nach Anspruch 3, **dadurch gekennzeichnet, dass** der Stellmotor (54) außerhalb des Gehäuses (2) angeordnet ist.

8. Ventil nach Anspruch 1, **dadurch gekennzeichnet, dass** die Stelleinrichtung (42, 46, 51, 54) ein Spindelgetriebe (42, 46) aufweist.

9. Ventil nach Anspruch 1, **dadurch gekennzeichnet, dass** die Stelleinrichtung (42, 46, 51, 54) einen Schneckentrieb (46, 51) aufweist.

10. Ventil nach Anspruch 1, **dadurch gekennzeichnet, dass** die Sitzringe (14, 26) gegeneinander abgedichtet sind und dienen Mittelraum abgrenzen, an dem zumindest ein Druckabgriff (57) vorgesehen ist.

11. Ventil nach Anspruch 1, **dadurch gekennzeichnet, dass** das Ventilverschlussglied (39) als Strömungskörper ausgebildet ist.

12. Ventil nach Anspruch 1, **dadurch gekennzeichnet, dass** der Hub der Ventilsitzringe (14, 26) mindestens so groß ist wie der Hub des Ventilverschlussglieds (39).

13. Verfahren zum Freigeben und Sperren eines Fluidstroms mit einem Ventil (1) nach Anspruch 1, bei dem
ausgehend von einem geschlossenen Zustand, in dem der zumindest eine Ventilsitzring (14, 26) unter der Wirkung einer Schließfeder (23, 34) abdichtend an dem Ventilverschlussglied (39) anliegt,
zur Vorbereitung des Öffnens des Ventils (1) das Ventilverschlussglied (39) zunächst in einer ersten Richtung (49) verstellt wird, um den Ventilsitzring (14, 26) gegen die Kraft seiner Schließfeder (23, 34) zu verlagern, bis der Ventilsitzring (14, 26) eine Arretierposition erreicht,
zur weiteren Vorbereitung des Öffnens des Ventils (1) die Arretiereinrichtung (22, 24, 35, 36) aktiviert wird, um den Ventilsitzring (14, 26) am Platz festzuhalten, und
das Ventilverschlussglied (39) durch die Stelleinrichtung (42, 46, 51, 54) in einer zweiten Richtung (50), die der ersten Richtung (49) entgegengesetzt ist, von dem arretierten Ventilsitzring (14, 26) weg verstellt wird.

## Claims

1. Valve (1)
with a tubular housing (2),
in which at least one first valve seat ring (14) is arranged to be axially movable, with a locking device (22, 24, 35, 36), which is associated with the valve seat rings (14, 26), to selectively lock these in a predetermined position,
with a valve closing member (39), which is movable towards the valve scat rings (14, 26) and away therefrom, to selectively close the valve seat rings (14, 26), displace and release them, **characterised in that**
an adjusting device (42, 46, 51, 54) is provided for shifting the position of the valve closing member (39).

2. Valve according to claim 1, **characterised in that** the locking device (22, 24, 35, 36) has a magnet coil (24), which is arranged in the tubular housing (2).

3. Valve according to claim 1, **characterised in that** the valve seat ring (24) has an associated biasing element (23) to bias the valve seat ring (24) towards the valve closing member (39).

4. Valve according to claim 1, 2, 3, **characterised in that** a second valve seat ring (26) is provided, which is arranged to be axially movable and concentrically to the first valve seat ring (14), wherein each valve ring (14, 26) has a respective associated pressure spring (23, 34) to bias the valve seat rings (14, 26) towards the valve closing member (39).

5. Valve according to claim 1, **characterised in that** the valve closing member (39) and the valve seat ring or rings (14, 26) is/are arranged concentrically to the housing (2).

6. Valve according to claim 1, **characterised in that** the adjusting device (42, 46, 51, 54) has a servomotor (54).

7. Valve according to claim 3, **characterised in that** the servomotor (54) is arranged outside the housing (2).

8. Valve according to claim 1, **characterised in that** the adjusting device (42, 46, 51, 54) has a spindle gear (42, 46).

9. Valve according to claim 1, **characterised in that** the adjusting device (42, 46, 51, 54) has a worm drive (46, 51).

10. Valve according to claim 1, **characterised in that** the seat rings (14, 26) are sealed relative to one another and serve to delimit a central area, on which at least one pressure tap (57) is provided.

11. Valve according to claim 1, **characterised in that** the valve closing member (39) is configured as a flow body.

12. Valve according to claim 1, **characterised in that** the stroke of the valve seat rings (14, 26) is at least as high as the stroke of the valve closing member (39).

13. Method for releasing and blocking a fluid flow with a valve (1) according to claim 1, in which
starting from a closed state, in which the at least one valve seat ring (14, 26) abut against the valve closing member (39) under the action of a closing spring (23, 34) to form a seal,
to prepare for opening the valve (1), the valve closing member (39) is firstly shifted in a first direction (49) to move the valve seat ring (14, 26) against the force of its closing spring (23, 34) until the valve seat ring (14, 26) reaches a locking position,
to further prepare for opening the valve (1), the locking device (22, 24, 35, 36) is activated to fix the valve seat ring (14, 26) in position, and
the valve closing member (39) is shifted away from the locked valve seat ring (14, 26) by means of the adjusting device (42, 46, 51, 54) in a second direction (50) that is opposed to the first direction (49)

## Revendications

1. Soupape (1),
comprenant un corps (2) tubulaire,
dans lequel est disposé au moins un premier siège rapporté de soupape (14), avec possibilité de déplacement axial,
comprenant un dispositif d'arrêt (22, 24, 35, 36) qui est associé aux sièges rapportés de soupape (14, 25), afin de les arrêter au choix dans une position prédéterminée,
comprenant un organe obturateur de soupape (39) qui peut être déplacé en direction des sièges rapportés de soupape (14, 26) et dans la direction opposée, afin d'obtenir au choix la fermeture, le déplacement ou la libération des sièges rapportés de soupape (14, 26),
**caractérisée en ce qu'**
il est prévu un dispositif d'actionnement (42, 46, 51, 54) pour modifier la position de l'organe obturateur de soupape (39).

2. Soupape selon la revendication 1, **caractérisée en ce que** le dispositif d'arrêt (22, 24, 35, 36) présente une bobine d'électroaimant (24) qui est disposée dans le corps (2) tubulaire.

3. Soupape selon la revendication 1, **caractérisée en ce qu'**un moyen de précontrainte (23) est associé au siège rapporté de soupape (24), afin de mettre le siège rapporté de soupape (24) sous précontrainte en direction de l'organe obturateur de soupape (39).

4. Soupape selon les revendications 1, 2, 3, **caractérisée en ce qu'**il est prévu un deuxième siège rapporté de soupape (26) qui est disposé avec possibilité de déplacement axial et de façon concentrique avec le premier siège rapporté de soupape (14), un ressort de pression (23, 34) étant associé à chaque siège rapporté de soupape (16, 24), afin de mettre les sièges rapportés (14, 26) sous précontrainte en direction de l'organe obturateur de soupape (39).

5. Soupape selon la revendication 1, **caractérisée en ce que** l'organe obturateur de soupape (39) et le ou les siège(s) rapporté(s) de soupape (14, 26) sont disposés de façon concentrique avec le corps (2).

6. Soupape selon la revendication 1, **caractérisée en ce que** le dispositif d'actionnement (42, 46, 51, 54) présente un servomoteur (54).

7. Soupape selon la revendication 3, **caractérisée en ce que** le servomoteur (54) est disposé à l'extérieur du corps (2).

8. Soupape selon la revendication 1, **caractérisée en ce que** le dispositif d'actionnement (42, 46, 51, 54) présente un mécanisme à broche (42, 46).

9. Soupape selon la revendication 1, **caractérisée en ce que** le dispositif d'actionnement (42, 46, 51, 54) présente un mécanisme à vis sans fin (46, 51).

10. Soupape selon la revendication 1, **caractérisée en ce que** les sièges rapportés (14, 26) sont rendus étanches l'un vis-à-vis de l'autre et délimitent un espace intermédiaire sur lequel est prévue au moins une prise de pression (57).

11. Soupape selon la revendication 1, **caractérisée en ce que** l'organe obturateur de soupape (39) est réalisé sous forme de corps hydrodynamique.

12. Soupape selon la revendication 1, **caractérisée en ce que** la course des sièges rapportés de soupape (14, 26) est au moins aussi grande que la course de l'organe obturateur de soupape (39).

13. Procédé pour autoriser et arrêter le passage d'un flux de fluide à l'aide d'une soupape (1) selon la revendication 1, selon lequel
partant de l'état fermé, dans lequel le siège rapporté de soupape (14, 26), au nombre d'au moins un, est appliqué de manière étanche contre organe obturateur de soupape (39), sous l'action d'un ressort de fermeture (23, 34),
pour préparer l'ouverture de la soupape (1), l'organe obturateur de soupape (39) est d'abord déplacé dans une première direction (49) pour déplacer le siège rapporté de soupape (14, 26) à l'encontre de la force de son ressort de fermeture (23, 34), jusqu'à ce que le siège rapporté de soupape (14, 26) ait atteint une position d'arrêt,
pour continuer à préparer l'ouverture de la soupape (1), le dispositif d'arrêt (22, 24, 35, 36) est activé pour maintenir en place le siège rapporté de soupape (14, 26), et
l'obturateur de soupape (39) est éloigné du siège rapporté de soupape (14, 26) arrêté, en étant déplacé par le dispositif d'actionnement (42, 46, 51, 54) dans une deuxième direction (50) qui est opposée à la première direction (49).
